# EUROPÄISCHE PATENTANMELDUNG

(11) **EP 2 017 554 A2**
(43) Veröffentlichungstag der Anmeldung: **21.01.2009**
(21) Anmeldenummer: 08009311.5
(22) Anmeldetag: 21.05.2008
(51) Int. Cl.: F24J 2/52, H01L 31/042

(54) **Befestigungseinrichtung für an einem Gestellaufbau anzuordnende flächige Bauteile, insbesondere Solarmodule**

(30) Priorität: 16.07.2007 DE 102007033323
(71) Anmelder: Fath Industries GmbH, 91174 Spalt (DE)
(72) Erfinder: Fath, Jan Mirko, 91166 Georgensgmünd (DE)
(74) Vertreter: Blaumeier, Jörg

(57) **Zusammenfassung**

Befestigungseinrichtung für an einem Gestellaufbau anzuordnende flächige Bauteile, insbesondere Solarmodule, umfassend eine erste und eine zweite, voneinander beabstandet, horizontal und parallel am Gestellaufbau anzuordnende Tragprofilschiene, an denen ein Bauteil im Bereich seiner einander gegenüberliegenden Ränder festlegbar ist, wobei an der Unterseite eines Bauteils (3) im Bereich der Seitenränder angeordnete, das Bauteil zumindest abschnittsweise randseitig umgreifende Profilelemente (21) mit einem zum Seitenrand vorspringenden Haltesteg (24) vorgesehen sind, die der Verbindung mit den Tragprofilschienen (8) dienen, und dass zum Verbinden eines Profilelements (21) mit wenigstens einer, vorzugsweise der ersten Tragprofilschiene (8) ein Halteelement (31) mit einem ersten Befestigungsabschnitt zum Befestigen an einem Befestigungsbereich (9) der Tragprofilschiene (8) und einem zweiten Befestigungsabschnitt mit zwei zu beiden Seiten vorspringenden Halteabschnitten (35), die in der Montagestellung die einander gegenüberliegenden Haltestege (24) zweier nebeneinander festzulegender Bauteile (3) übergreifen, vorgesehen ist.

## Beschreibung

Die Erfindung betrifft eine Befestigungseinrichtung für an einem Gestellaufbau anzuordnende flächige Bauteile, insbesondere Solarmodule, umfassend eine erste und eine zweite, voneinander beabstandet, horizontal und parallel am Gestellaufbau anzuordnende Tragprofilschienen, an denen ein Bauteil im Bereich seiner einander gegenüberliegenden Ränder festlegbar ist.

Großflächige Bauteile wie beispielsweise Solarmodule oder Sonnenkollektoren etc. werden üblicherweise im Freien, sei es freistehend oder auf Hausdächern, auf einem Gestellaufbau angeordnet. Der Gestellaufbau ist üblicherweise im Boden oder am Dach selbst verankert und besteht beispielsweise aus entsprechenden Seitenführungen, gebildet aus geeigneten Profilschienen, an denen über eine geeignete Befestigungseinrichtung die Bauteile fixiert werden. Eine solche Befestigungseinrichtung umfasst üblicherweise zwei parallel und beabstandet zueinander am Gestellaufbau anzuordnende Profilschienen, die sich zwischen den Gestellaufbauabschnitten erstrecken. An diesen Profilschienen werden die Bauteile randseitig oder mit Befestigungsmittel fixiert. Hierzu kommen üblicherweise Schraubbefestigungen zum Einsatz, also geeignete Halterungen, die an der jeweiligen Profilschiene festgeschraubt und in geeigneter Weise, häufig auch über Schraubverbindungen, fixiert werden. D. h., jedes einzelne Bauteil wird einzeln befestigt bzw. verschraubt, was während der Montage sehr aufwendig ist, als auch im Rahmen der Demontage, beispielsweise wenn ein Bauteil wegen Defekts auszutauschen ist.

Eine demgegenüber wesentlich einfachere Befestigungsmöglichkeit ist in der nachveröffentlichten deutschen Patentanmeldung 10 2006 053 831 beschrieben. Dort kommt ein einfach ausgebildetes Halteblech zum Einsatz, das in eine hinterschnittene Nut an einer Profilschiene eingesetzt und verdreht wird, und das einen Halteabschnitt aufweist, mit dem ein Bauteil seitlich an seinem Rahmen übergriffen wird. Die Haltebleche sind lediglich eingesteckt bzw. eingedreht, was ein sehr einfaches Befestigen und damit Aufbauen der gesamten Anordnung ermöglicht, zum anderen ist auch ein Austausch denkbar einfach. Der Umstand, dass das Halteblech in der Montagestellung zwischen den Rahmen angeordnet ist, so dass diese in der Montagestellung um mehrere Millimeter bis Zentimeter beabstandet sind, ist in sofern nachteilig, als hierdurch die maximal mögliche, auf der gegebenen Grundfläche verlegbare aktive Fläche an Solarmodulen reduziert wird. Bezogen beispielsweise auf die Fläche eines Hausdachs führt dieser zwangsläufig gegebene Abstand zwischen den einzelnen Modulen, sei es in vertikaler wie in horizontaler Richtung, dazu, dass mit unter weit weniger Modulfläche verlegt werden kann, als Grundfläche vorhanden wäre.

Die Erfindung liegt damit das Problem zu Grunde, eine Befestigungseinrichtung anzugeben, die ein sehr eng benachbartes Anordnen flächiger Bauteile, insbesondere von Solarmodulen, ermöglicht.

Zur Lösung dieses Problems ist bei einer Befestigungseinrichtung der eingangs genannten Art erfindungsgemäß vorgesehen, dass an der Unterseite eines Bauteils im Bereich zumindest eines Teils der Seitenränder angeordnete, das Bauteil zumindest abschnittsweise randseitig umgreifende Profilelemente mit einem zum Seitenrand vorspringenden Haltesteg vorgesehen sind, die der Verbindung mit den Tragprofilschienen dienen, und dass zum Verbinden eines Profilelements mit der ersten Tragprofilschiene ein Halteelement mit einem ersten Befestigungsabschnitt zum Befestigen an einem Befestigungsbereich der Tragprofilschiene und einem zweiten Befestigungsabschnitt mit zwei zu beiden Seiten vorspringenden Halteabschnitten, die in der Montagestellung die einander gegenüberliegenden Haltestege zweier nebeneinander festzulegender Bauteile übergreifen, vorgesehen ist.

Bei der erfindungsgemäßen Befestigungseinrichtung sind an den Bauteilen nur an deren Unterseite angeordnete Profilelemente vorgesehen, die unter Bildung eines das Bauteil randseitigen rahmenartigen Umgriffs minimal, vorzugsweise ca. 1 - 2 mm (je nach Stärke des randseitig umgreifenden Profilabschnitts), über die Seitenränder der Bauteile herausragen und so vermeiden, dass z. B. im Fall von Solarmodulen deren Glasscheiben aneinander liegen können. Vielmehr liegen die rahmenartigen Umgriff-Abschnitte direkt aneinander an. Die Profilelemente weisen einen vorzugsweise zum Seitenrand hin gerichteten Haltesteg auf, der mit einem Halteelement zusammenwirkt, das wiederum an einer Tragprofilschiene lösbar befestigt wird. Der Haltesteg könnte aber z. B. auch am Rand des Profilelements vertikal stehen, so dass seine obere freie Kante mit dem Halteelement zusammenwirkt. Das Halteelement selbst weist einen ersten Befestigungsabschnitt zum Befestigen an der Tragprofilschiene sowie einen zweiten Befestigungsabschnitt auf, mit dem es mit dem jeweiligen Haltesteg zweier benachbarter Bauteile zusammenwirken. D. h., die Fixierung der Bauteile an den Tragprofilschienen und damit am Gestellaufbau erfolgt ausschließlich im Bereich unterhalb der Bauteile, nachdem der klemmende Übergriff der Halteabschnitte über die Haltestege der Profilelemente im Bereich unterhalb der Bauteile erfolgt. Diese können deshalb in maximale Annäherung aneinander positioniert werden, d. h., sie können unmittelbar aneinander anliegen, mithin einander mit den Profilelementen an deren Rahmenumgriff also auch berühren. Dies ermöglicht es folglich, die vorhandene Grundfläche maximal ausnutzen zu können, nachdem es bei Einsatz der erfindungsgemäßen Befestigungsvorrichtung keine zwingende Beabstandung der Bauteile auf Grund zwischen die Bauteile zu setzender Halteelemente gibt. Die Anordnung des oder der Profilelemente an der Bauteilunterseite reduziert ferner die aktive Fläche des als Solarmodul ausgeführten Bauteils nicht so sehr wie bei bekannten Systemen, bei denen die Rahmen die Bauteiloberseite randseitig übergreifen und so die aktive Fläche verkleinern, da bei dem erfindungsgemäßen System dem umgreifenden Profilelementabschnitt an der Oberseite der Bauteile keine Trag- oder Haltefunktion für ein Halteelement zukommt.

Grundsätzlich besteht die Möglichkeit, ein Bauteil an der ersten und der zweiten Tragprofilschiene über derartige Halteelemente zu befestigen. Erfindungsgemäß besonders zweckmäßig ist es jedoch, die Bauteile nur an der ersten Tragprofilschiene über derartige Halteelemente zu befestigen und zum Fixieren an der zweiten Tragprofilschiene eine andere Haltemöglichkeit vorzusehen, die ebenfalls das Vorhandensein des unterhalb eines Bauteils befindlichen Haltestegs und Profilelements für eine Klemmsteckhalterung in Verbindung mit einer entsprechenden Klemmaufnahme an der zweiten Tragprofilschiene nutzt, worauf nachfolgend noch eingegangen wird.

Die bauteilunterseitig angeordneten Profilelemente sind zweckmäßigerweise sich vertikal und horizontal erstreckende Profilschienen, die entweder auf Gehrung geschnitten im Bereich ihrer Ecken mittels vorzugsweise innenliegenden Eckverbindern miteinander verbunden sind, oder die über entsprechende sie eckseitig verbindende Profilverbinder, die dann die Profilelemente bilden, nachdem die Tragprofilschienenfixierung im Bereich der Ecken erfolgt, miteinander verbunden sind. Hierüber wird eine zu starke Durchbiegung der Bauteile in der Montagestellung verhindert, sei es in vertikaler oder in horizontaler Richtung.

Das Haltelement selbst ist im Wesentlichen T-förmig und weist einen Längsschenkel und einen an diesem angeordneten, die beiden Halteabschnitte bildenden Querschenkel auf, d. h., der Querschenkel greift beidseitig über die entsprechenden Haltestege der benachbarten Profilelemente. Das Halteelement kann ein- oder mehrteilig sein . Die jeweilige Tragprofilschiene, an der das Haltelement, das im Bereich des Längs- und Querschenkels einige mm, vorzugsweise 1-5 mm, insbesondere 2 mm, stark ist, befestigt wird, weist als Befestigungsbereich bevorzugt eine hinterschnittene Nut auf, während der erste Befestigungsabschnitt am Haltelement als Hakenabschnitt ausgebildet ist, über den das Halteelement in der hinterschnittenen Nuten in der Montagestellung einhakbar ist. Bevorzugt ist die Nut als doppelt hinterschnittene T-Nut und der Hakenabschnitt der Nutform entsprechend T-förmig ausgebildet. Dies lässt ein einfaches Einsetzen zu, der Hakenabschnitt ist lediglich von oben in die Nut einzusetzen und anschließend zu verdrehen, um ihn sicher zu fixieren. Das Haltelement ist in der Nut längsverschiebbar, kann also ohne weiteres an einer beliebigen Stelle eingesetzt und entsprechend in Position und damit Übergriff über den Haltesteg eines Profilelements geschoben werden.

Im Rahmen der Montage wird ein erstes Bauteil fixiert, wonach der oder die Haltelemente an ihm unter Übergriff über den Haltesteg positioniert werden und danach das zweite Bauteil herangeschoben wird. Um zu vermeiden, dass hierbei zwei benachbarte Bauteile mit ihren Seitenrändern, im Wesentlichen gebildet durch die freiliegende Glasplattenkante im Falle eines Solarmoduls, beim Aneinanderschieben direkt aneinander schlagen - sofern dies nicht bereits durch die gegebenenfalls seitlich um ca. 1 - 2 mm vorspringenden, das Bauteil randseitig umgreifenden Abschnitte der Profilelemente sichergestellt ist -, ist zweckmäßigerweise an einem Haltelement wenigstens ein in der Montagestellung die benachbarten Profilelemente gegenlagernder Anschlag vorgesehen, an dem beide Bauteile über ihre jeweiligen Profilelemente anliegen und über den sie und damit die Bauteile definiert beabstandet werden. Der Anschlag ist dabei so ausgelegt und positioniert, dass die Profilelemente dagegen laufen und gleichzeitig die Seitenränder der Bauteile in eine gewünschte möglichst nahe Anlage aneinander positioniert werden.

Nachdem Solarmodule üblicherweise schrägstehend angeordnet werden, sieht eine zweckmäßige Weiterbildung vor, am ersten Befestigungsbereich einer Tragprofilschiene einen vorzugsweise stegförmigen Anschlag für das oder die im Bereich des unteren Bauteilrands angeordneten Profilelemente vorzusehen. Beim Anordnen eines Bauteils wird dieses beispielsweise zunächst im Bereich seines oberen Randes auf die nachfolgend noch beschriebene bevorzugte Weise fixiert, wonach das Bauteil mit seinem unteren Rand abgesenkt wird, bis das oder die Profilelemente auf der Tragprofilschiene aufliegen und wegbegrenzt an dem stegförmigen Anschlag anliegen, über den ein weiteres Abrutschen verhindert wird, wonach auf einfache Weise die Fixierung über die Halteelemente erfolgt.

Wie beschrieben besteht grundsätzlich die Möglichkeit, die Bauteile im Bereich sowohl des unteren als auch des oberen Randes unter Verwendung eines beschriebenen Halteelements zu fixieren. Eine zweckmäßige Erfindungsausgestaltung sieht jedoch vor, dies nur im Bereich des unteren Randes zur Fixierung an einer ersten Tragprofilschiene vorzunehmen und im Bereich des oberen Bauteilrandes zur Befestigung an der zweiten Tragprofilschiene eine andere Befestigungsmöglichkeit vorzusehen. Hierzu weist die gegebenenfalls zweite Tragprofilschiene einen zweiten Befestigungsbereich in Form einer zum Bauteilrand offenen, im Wesentlichen C-förmigen Aufnahmenut auf, in die der Haltesteg des oder der dortigen Profilelemente, von einem Schenkel der Aufnahmenut übergriffen, eingreift. Es erfolgt hier eine einfache Steckklemmhalterung, indem der Rand des Profilelements mit dem vorspringenden Haltesteg in die offene Aufnahmenut eingesteckt wird, so dass der Haltesteg von der Aufnahmenutschulter übergriffen und gegen ein Anheben fixiert wird. D. h., im Rahmen der Montage ist lediglich der Profilelementabschnitt mit dem Haltesteg in die Aufnahmenut von unten her einzuschieben, wonach das Bauteil abgesenkt wird, bis das oder die unteren Profilelemente auf der unteren Tragprofilschiene aufsitzen und gegen den dortigen Anschlagsteg laufen, wonach sofort die Fixierung über das Halteelement erfolgen kann.

Eine besonders zweckmäßige Weiterbildung sieht vor, dass an jeder Tragschiene der erste und der zweite Befestigungsbereich ausgebildet ist, d. h., die Schienen sind insoweit identisch ausgebildet so dass insgesamt nur ein Profil vorrätig gehalten werden muss, das die beiden erfindungsgemäßen Befestigungsmöglichkeiten bietet.

Dabei ist nach einer zweckmäßigen Weiterbildung der Erfindung in der Montagestellung der erste Befestigungsbereich höher als der zweite Befestigungsbereich angeordnet. Wie beschrieben erfolgt die Fixierung über die Profilelemente stets im Bereich des zur Seite oder vertikal vorspringenden Haltestegs. Dieser ist bezogen auf die Unterseite eines Bauteils, da umlaufend, stets in gleicher Position. Liegt nun der erste Befestigungsbereich höher als der zweite Befestigungsbereich, so führt dies zwangsläufig dazu, dass in der Montagestellung das Bauteil relativ gesehen im unteren Randbereich, wo es am ersten Befestigungsbereich angeordnet wird, etwas höher liegt als im oberen Randbereich, wo es am zweiten Befestigungsbereich fixiert ist. Dies bietet nun die besonders vorteilhafte Möglichkeit, zwei übereinander angeordnete Bauteile etwas miteinander zu überlappen. Denn in Folge des höhenmäßigen Versatz der beiden Befestigungsabschnitte kann der obere Randbereich eines unteren Bauteils unter den unteren Randbereich eines oberen Bauteils geschoben und angeordnet werden. D. h., der untere Randbereich des oberen Bauteils überlappt etwas über den oberen Randbereich des unteren Bauteils, so dass sich eine quasi geschuppte Anordnung, gesehen in vertikaler Richtung, bei gleichzeitiger Möglichkeit einer nahezu unmittelbar aneinanderliegenden Anordnung in horizontaler Richtung realisieren lässt. Dies bietet nun die Möglichkeit, solche Bauteile quasi als Dachziegelersatz zu verwenden, mithin also das Dach über diese Bauteile selbst zu decken (in-Dach-Ausführung).

Insbesondere bei einer solchen Anordnung, aber auch dann, wenn die Bauteile nicht versetzt und überlappt, sondern ebenenparallel angeordnet werden, ist es zweckmäßig, an dem in der Montagestellung unteren horizontal verlaufenden und als Profilschiene ausgebildeten Profilelement ein sich im gegebenenfalls vorgesehenen Profilverbinder gegebenenfalls fortsetzendes Dichtelement vorzusehen, an dem in der Montagestellung der Rand des unterhalb davon angeordneten Bauteils anliegt. Hierüber wird vorteilhaft eine Dichtung im Bereich des horizontalen Spalts zwischen zwei Bauteilen ermöglicht.

Um auch in Längsrichtung grundsätzlich eine Dichtmöglichkeit vorzusehen, um zu vermeiden, dass durch den sich auch bei einander (fast) berührenden Bauteilen im Bereich der Längsseitenränder ergebenden Kapillarspalt Feuchtigkeit nach unten absondert, ist zweckmäßigerweise zwischen zwei einander gegenüberliegenden Profilelementen ein sich bezogen auf die Montagestellung in Längsrichtung erstreckendes und unterhalb des Übergangsspaltes zwischen zwei benachbarten Bauteilen verlaufendes, gegebenenfalls auch der Aussteifung dienendes Profilbauteil vorgesehen. Dieses Profilbauteil kann beispielsweise aus Kunststoff oder Metall sein und erstreckt sich über die Länge eines länglichen, rechteckigen Bauteils (dessen Länge beträgt beispielsweise ca. 1,7 m, während die Breite ca. 1 m beträgt). Das Profilbauteil verläuft genau unterhalb des sich ergebenden schmalen Spaltes und nimmt darüber eindringendes Tropfwasser auf und leitet es nach unten ab, wo es in Folge entweder der Fortsetzung des Profilbauteils zum nächsten Bauteil oder der überlappten Anordnung abgeleitet werden kann.

In jedem Fall ist zweckmäßigerweise an jedem Profilelement ein seitlich offener Aufnahme- oder Klemmabschnitt für einen Klemmabschnitt des Dichtelements oder des Seitenschenkels des Profilbauteils vorgesehen. Hierüber kann eine einfache Fixierung des Dichtelements, beispielsweise eines Gummidichtelements, das hinreichend verformbar ist und beispielsweise eine Dichtlippe oder dergleichen aufweist, oder des Profilbauteils, das als Metallteil oder auch als hinreichend steifes Kunststoffteil ausgeführt sein kann, erreicht werden.

Um eine sichere Auflage der Profilelemente auf den Tragprofilschienen zu sorgen, ist zweckmäßigerweise an zumindest einem Teil der Auflageflächen der Profilelemente eine zahn- oder rillenartige Oberflächenstruktur vorgesehen.

Ferner kann ein Profilelement, insbesondere soweit dieses als Profilschiene ausgebildet ist, wenigstens eine Hohlkammer aufweisen, in der ein Aussteifungselement angeordnet ist. Dieses z. B. aus Metall, vorzugsweise Aluminium (wie die Profilelemente selbst) bestehende Aussteifungselement dient der Versteifung des gesamten Bauteils, um Längs- bzw. Querbiegungen zu vermeiden.

Neben der Befestigungseinrichtung selbst betrifft die Erfindung ferner eine Bauteilgruppe, insbesondere Solarmodulgruppe, die auf einem Gestellaufbau angeordnet ist, bei welcher mehrere nebeneinander angeordnete Bauteile unter Verwendung einer Befestigungseinrichtung der beschriebenen Art zu einem Verbund zusammengesetzt sind. Dabei ist es bei der erfindungsgemäßen Bauteilgruppe lediglich erforderlich, an den äußeren Bauteilen eine Diebstahlsicherung vorzusehen, da die inneren Bauteile über die Halteelemente und die bevorzugte Klemmsteck-Fixierung am anderen Bauteilrand sicher und ohne Lösen der Diebstahlsicherungsvorrichtung nicht entnehmbar angeordnet sind.

Weitere Vorteile, Merkmale und Einzelheiten der Erfindung ergeben sich aus dem im Folgenden beschriebenen Ausführungsbeispiels sowie anhand der Zeichnung. Dabei zeigen:
- Fig. 1: eine Prinzipdarstellung einer erfindungsgemäßen Bauteilgruppe in Form von Solarmodulen, montiert auf einem Hausdach,
- Fig. 2: eine Darstellung des Gestellaufbaus mit daran angeordneten Trag- profilschienen,
- Fig. 3: eine Schnittansicht entlang der Linie III-III in Fig. 2 durch eine Trag- profilschiene,
- Fig. 4: eine Schnittansicht durch ein Profilelement zur Darstellung von des- sen Grundstruktur,
- Fig. 5: eine Ansicht eines Bauteils in Form eines Solarmoduls mit darin an- geordneten Profilelementen im Bereich seines unteren Randes in der Montagestellung an einer Tragprofilschiene mit einem Halteelement,
- Fig. 6: eine Seitenansicht, teilweise im Schnitt, der Anordnung aus Fig. 5,
- Fig. 7: eine Seitenansicht des Bauteils aus den Fig. 5 und 6 im Bereich sei- nes oberen Bauteilrandes in der Montagestellung an der zweiten Tragprofilschiene nebst Darstellung des ebenfalls an dieser Tragpro- filschiene montierten anderen Bauteils,
- Fig. 8: eine Ansicht zweier montierter, nebeneinander angeordneter Bautei- le im Bereich ihrer aneinanderliegender Längskanten mit eingesetz- tem Profilbauteil, und
- Fig. 9: eine Ansicht des äußeren Bauteils im Bereich seiner Außenkante zur Darstellung der randseitigen Montage.

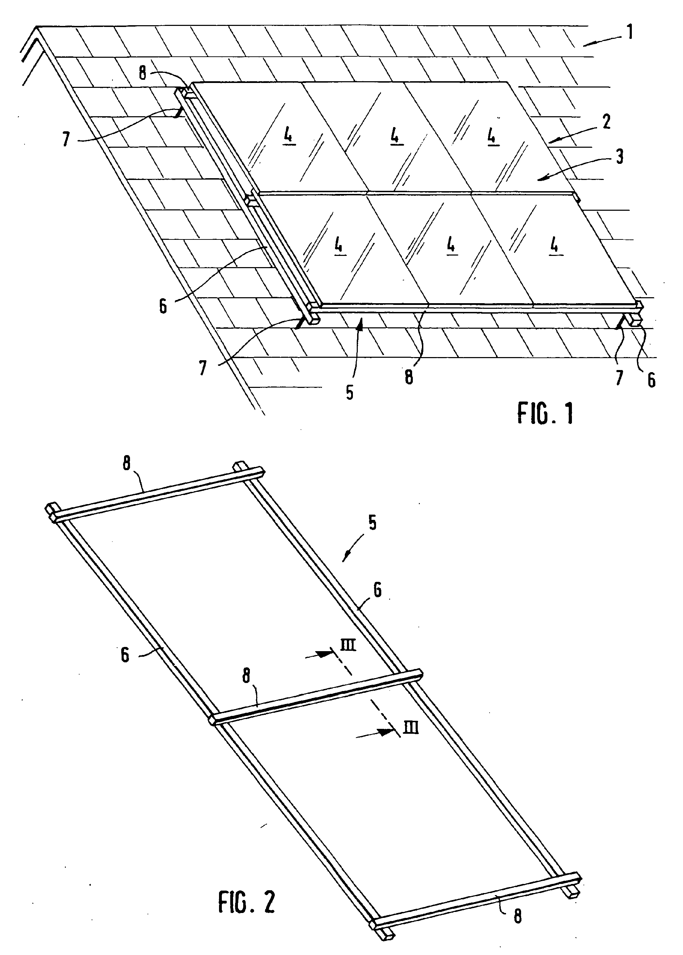

Fig. 1 zeigt in Form einer Prinzipdarstellung eine an einem Hausdach 1 angeordnete Bauteilgruppe 2, umfassend lediglich exemplarisch sechs Bauteile 3, z. B. in Form von Solarmodulen 4 umfassend eine Vielzahl von der Energieerzeugung dienende Solarzellen. Zur Halterung der Solarmodule 4 ist ein Gestellaufbau 5 vorgesehen, umfassend zwei hier vertikal verlaufende Schienen 6, die über entsprechende Dachhalterungen 7 dachseitig fixiert sind. Über nicht näher gezeigte Befestigungsmittel sind zwei Tragprofilschienen 8 an den Schienen 6 des Gestellaufbaus angeordnet. Die beiden Tragprofilschienen 8 verlaufen beabstandet und parallel zueinander und queren die Schienen 6 horizontal. Sie sind Teil einer Befestigungseinrichtung für die Solarmodule 4, worauf nachfolgend noch eingegangen wird, die wiederum über geeignete Profilelemente und Halteelemente an den Tragprofilschienen 8 befestigt sind. An dieser Stelle ist darauf hinzuweisen, dass selbstverständlich auch weit mehr als sechs Solarmodule nebeneinander und auch mehr Reihen übereinander angeordnet sein können, je nach Größe der belegbaren Fläche.

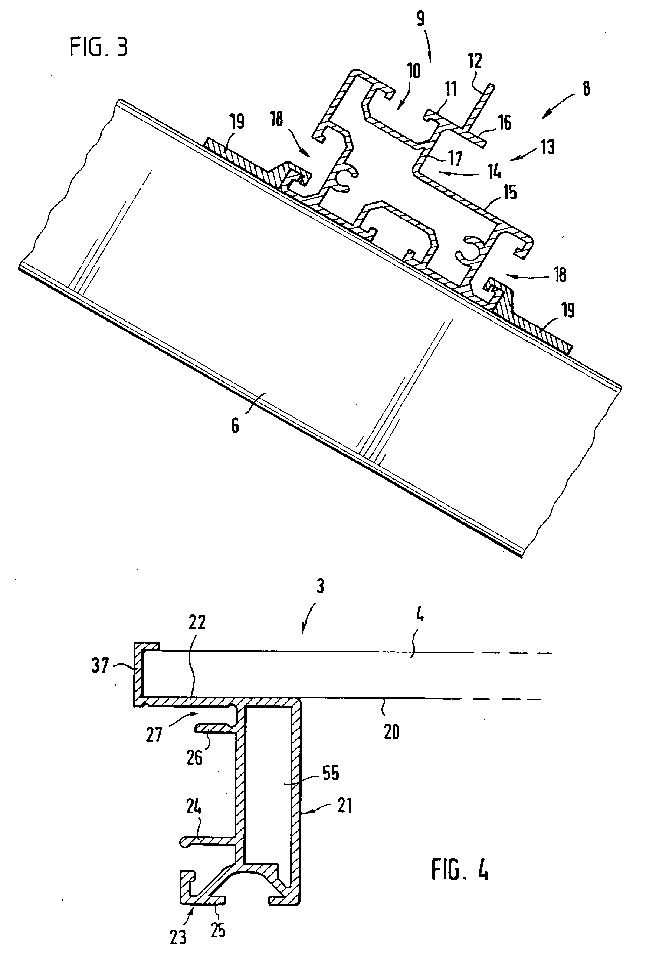

Fig. 2 zeigt in einer verbesserten Ansicht den Gestellaufbau 5 mit den Schienen 6 sowie den daran angeordneten, üblicherweise festgeschraubten Tragprofilschienen 8, von denen im gezeigten Beispiel drei dargestellt sind. Jeweils zwei Tragprofilschienen 8 dienen der Befestigung eines Bauteils 3, also jeweils eines Solarmoduls, so dass, bezogen auf ein solches Solarmodul, jeweils eine Tragprofilschiene die erste Tragprofilschiene und die andere Tragprofilschiene die zweite Tragprofilschiene darstellt. Die Tragprofilschienen sind alle samt gleich ausgeführt, Fig. 3 zeigt eine Schnittansicht durch ein solches Tragprofil 8. Um an einer solchen Tragprofilschiene 8 zwei vertikal gesehen aneinander anschließende Bauteile 3 bzw. Solarmodule 4 befestigen zu können, wie dies, ausgehend vom Beispiel gemäß Fig. 2, bei der mittleren Tragprofilschiene 8 der Fall ist, sind an jeder Tragprofilschiene 8 zwei Befestigungsbereiche ausgebildet, ein erster Befestigungsbereich 9 bestehend aus einer hier T-förmigen, also beidseits hinterschnittenen Nut 10 nebst einer Auflagefläche 11 und einem diese begrenzende Anschlag 12, sowie ein zweiter Befestigungsbereich 13 in Form einer zur Seite hin offenen, im Wesentlichen C-förmig im Querschnitt ausgeführten Aufnahmenut 14, die einen unteren Auflageschenkel 15 und einen oberen Schenkel 16 und einen Nutgrund 17 aufweist. Die beiden Befestigungsbereiche 9 und 13 sind ersichtlich höhenmäßig versetzt, der Befestigungsbereich 9 ist höher als der Befestigungsbereich 13. In Fig. 3 ist des Weiteren die Befestigung einer Tragprofilschiene 8 an einer Schiene 6 des Grundgestells gezeigt. Hierzu sind zwei seitliche T-Nuten 18 vorgesehen, in die entsprechende Klemmbleche 19 eingreifen, die wiederum über nicht gezeigte Befestigungsschrauben an der jeweiligen Schiene 6 befestigt sind.

Fig. 4 zeigt eine Teilansicht eines Bauteils 3, hier eines Solarmoduls 4 im Bereich eines seiner Ränder, wobei dies entweder ein Seitenrand oder der obere oder untere Bauteilrand sein kann. An der Unterseite 20 des Solarzellenmoduls 4 ist ein Profilelement 21 angeordnet, üblicherweise angeklebt, wozu das Profilelement 21 einen flächigen oberen Halteschenkel 22 aufweist. Das Profilelement 21, das wie eine Tragprofilschiene ebenfalls als Hohlkammerprofil aus Metall, vorzugsweise Aluminium ausgeführt ist, weist ferner einen Profilabschnitt 23 im Bereich seines unteren Endes auf, mit einem seitlich vorspringenden Haltesteg 24, der parallel zu einem unteren Steg 25 des Profilabschnitts 23 verläuft. Vorgesehen ist ferner ein weiterer Steg 26 unter Ausbildung einer Nut 27, die zur Aufnahme eines aussteifenden und abdichtenden Profilbauteils dient, worauf nachfolgend noch eingegangen wird. In der Hohlkammer 55 kann ein sich über die Länge des Profilelementes, das vorzugsweise eine Schiene ist, erstreckendes Aussteifungselement (z. B. aus Metall) angeordnet werden. Ein seitlicher nutartiger Umgriffsabschnitt 37, der sich bevorzugt über die gesamte Länge des Profilelements 21 erstreckt, erstreckt sich seitlich des Solarmoduls und umgreift dieses oberseitig ein kurzes Stück. Dieser bildet eine Art Seitenrahmen.

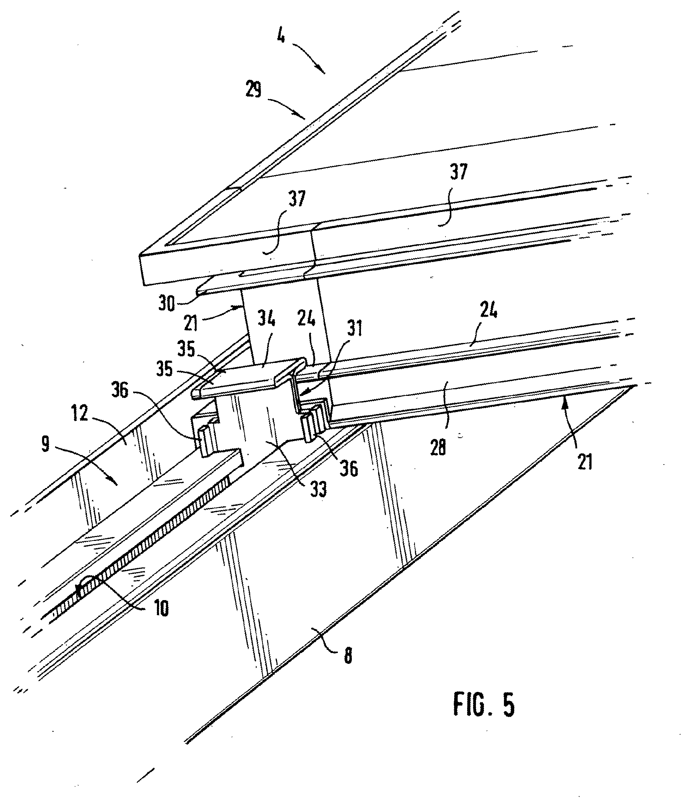

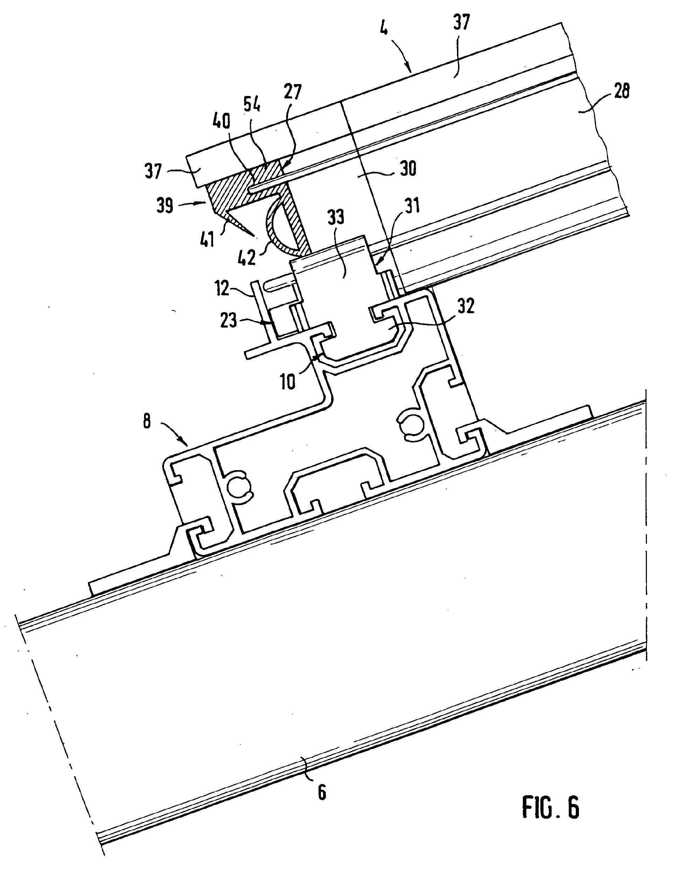

Die Fig. 5 und 6 zeigen nun die Befestigung eines Solarmoduls 4 im Bereich des unteren Randes an einer Tragprofilschiene 8. Unterhalb des Solarmoduls 4 sind im gezeigten Beispiel ein erstes Profilelement 21 in Form einer sich über die gesamte vertikale Länge des Solarzellenmoduls 4 erstreckenden Profilschiene 28 angeordnet. Ein nicht näher gezeigtes, ebenfalls als Profilschiene ausgebildetes Profilelement ist an der horizontal verlaufenden Seite 29 angeordnet. Beide Profilschienen 28 sind über einen angeklebten Profilverbinder 30, der die jeweilige Profilschienenform fortsetzt, und der ebenfalls ein Profilelement 21 bildet, verbunden. Der Profilverbinder 30 wie auch die horizontal verlaufende, nicht näher gezeigte Profilschiene weisen jeweils einen Profilabschnitt 23 auf, der an den Anschlagsteg 12 des ersten Befestigungsabschnitts 9 anstößt. Hierüber wird die Bewegung des in der Montagestellung schräg stehenden Solarmoduls nach unten begrenzt. Wie die Profilschiene 28 weist auch der Profilverbinder einen randseitigen Umgriffsabschnitt 37 auf.

Zur Fixierung wird ein Halteelement 31 verwendet, das, siehe Fig. 6, einen unteren T-förmigen Hakenabschnitt 32 aufweist, an dem sich ein Längsschenkel 33 anschließt, an dem wiederum ein Querschenkel 34 angeordnet ist, der zwei seitliche Halteabschnitte 35 bildet. Ferner sind zwei seitliche Anschläge 36 vorgesehen.

Das Halteelement 31, das im Bereich seines Längsschenkels flach, also blechartig mit einer Stärke von 2-5 mm ausgebildet ist, wird nun in einer bezogen auf die Fig. 5 und 6 um 90° verdrehten Stellung mit dem Hakenabschnitt 32 von oben her in die Nut 10 eingeschoben und anschließend um 90° in die in den Fig. 5, 6 gezeigte Stellung verdreht. Sodann wird der Hakenabschnitt 31 gegen das Solarmodul 4 geschoben, bis die beiden Anschläge 36 an dem unteren Schenkel 25 des Profilabschnitts 23 des Profilverbinders 30 anliegen, wobei in dieser Stellung dann der eine Halteabschnitt 35 den Haltesteg 24 flächig übergriffen hat, so dass hierüber in Verbindung mit dem Hakenabschnitt 32 ein klemmender Übergriff realisiert wird, der ein Anheben des Solarmoduls verhindert.

Zur Montage eines nächsten Solarmoduls 4 wird dieses in entsprechender Weise mit seinem unteren Randbereich bzw. den dort vorgesehenen Profilelementen 21 (Profilschiene 28 und Profilverbinder 30) auf den ersten Befestigungsabschnitt 9 aufgelegt und gegen den Anschlagsteg 12 geführt und sodann gegen das bereits angeordnete Solarmodul 4 geschoben. Hierbei läuft der entsprechende Profilabschnitt 23 des an der benachbarten Solarmodulseite befindlichen Profilverbinders 30, der bei der gezeigten Ausführung im Bereich des Profilabschnitt 23 einen kurzen Vertikalsteg 53 aufweist, gegen die andere Seite der Anschläge 36 des bereits gesetzten Halteelements 31, der dortige Haltesteg 24 des Profilverbinders 30 wird unter den zweiten Halteabschnitt 35 des Halteelements 31 geschoben, so dass auch dieses Bauteil dann lagefest gesichert ist. Die Ausgestaltung des Halteelements 31, insbesondere die Länge der Anschläge 36, ist dabei so bemessen, dass die beiden längs laufenden schmalen randseitigen Umgriffabschnitte 37 der benachbarten Profilelemente 21, die um ca. 1 - 2 mm seitlich vorspringen und verhindern, dass die Glaskanten der Modulglasplatten aneinander anliegen können, nur minimal voneinander beabstandet sind, bzw. direkt aneinander im Wesentlichen flächig anliegend.

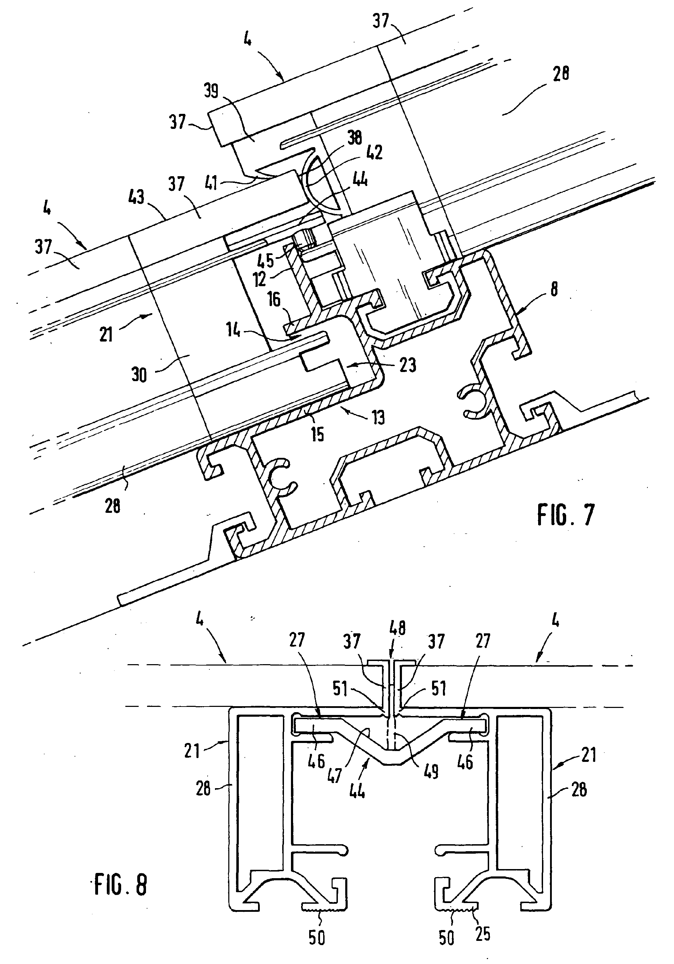

Während die Fig. 5 und 6 die Fixierung des unteren Bauteilrandes zeigen, zeigt Fig. 7 die Fixierung des oberen Bauteilrandes. Unterhalb des Solarmoduls 4 ist auch im Bereich des oberen Randes ein hier nicht näher gezeigte, parallel zur Bauteilrandkante 38 verlaufendes Profilelement 21 in Form einer Profilschiene 28 angeordnet, die wiederum über einen Profilverbinder 30, der seinerseits ein Profilelement 21 darstellt, mit der vertikal verlaufenden Profilschiene 28 verbunden ist. Zum Aufsetzen eines Solarmoduls 4 wird nun zunächst der untere Rand des Profilverbinders 30 und der horizontal verlaufenden Profilschiene 28 mit den jeweiligen Profilabschnitten 23 auf den Auflageschenkel 15 des zweiten Befestigungsabschnitts 13 gesetzt und sodann ein Stück nach oben geschoben, bis der Profilabschnitt 23 in der C-förmigen Aufnahmenut 14 aufgenommen ist und von deren Schenkel 16 übergriffen ist. Sodann wird der untere Bauteilrand auf den ersten Befestigungsabschnitt 9 der darunter befindlichen Tragprofilschiene 8 aufgesetzt und gegen den Anschlag 12 geführt, wie bezüglich der Fig. 5 und 6 beschrieben. In jedem Fall verbleibt jedoch der Profilabschnitt 23 des Profilverbinders 30 und der horizontal verlaufenden Profilschiene 28 in der C-förmigen Aufnahmenut 14, so dass auch hier eine Sicherung gegen ein unbeabsichtigtes Anheben gegeben ist. Eine weitere Fixierung im Bereich des oberen Bauteilrandes erfolgt nicht, lediglich gegen ein horizontales Verschieben worauf nachfolgend noch eingegangen wird.

In Fig. 7 ist ferner gezeigt, wie ein erstes Solarmodul 4 mit einem oberhalb davon angeordneten zweiten Solarmodul 4 lagemäßig zusammenwirkt. Am oberen Solarmodul 4 ist, siehe auch Fig. 6, ein Dichtelement 39 angeordnet, das sich über die gesamte horizontale Breite erstreckt. Es ist an den horizontal verlaufenden Profilelementen, also dem Profilverbinder 30 und der horizontal verlaufenden, nicht gezeigten Profilschiene 28 angeordnet. Die Fixierung erfolgt in der Nut 27, die als Klemmnut dient. Das Dichtelement 39 weist einen entsprechenden Schlitz 40 auf, über den ein Klemmabschnitt 54 gebildet wird, der in die Klemmnut 27 eingeschoben wird. Ferner ist eine nach unten ragende Dichtlippe 41 sowie eine Dichtschlaufe 42 an der Innenseite vorgesehen.

Wie Fig. 7 zeigt, wird das Solarmodul 4 unter das Dichtelement 39 geschoben, wobei sich die Dichtlippe 41 verformt und abdichtend an der Oberseite 43 des unteren Solarmoduls 4 aufliegt. Hierüber wird eine Linienabdichtung in horizontaler Richtung erreicht. Das obere Solarmodul 4 überlappt also über das untere Solarmodul 4, so dass sich eine geschuppte, schindelförmige Anordnung ergibt. Je nachdem, wie weit das untere Solarmodul 4 in Richtung des oberen Moduls 4 geschoben wird, kann über das Solarmodul 4 auch die Dichtschlaufe 42 zusammengedrückt werden, so dass sich auch dort eine Liniendichtung ergibt.

Wie Fig. 7 ferner zeigt, läuft ein Profilbauteil 44, das sich, worauf nachfolgend noch eingegangen wird, in vertikaler Richtung unterhalb des Übergangsschlitzes zwischen zwei benachbarten Solarmodulen 4 erstreckt, gegen die Dichtschlaufe 42. Dieses Profilbauteil 44 kann über einen Vorsprung 45 (z. B. einen eingesteckten Stift), der den Anschlagsteg 12 hintergreift, fixiert sein.

Eine solche Anordnung eines der Abdichtung dienenden Profilbauteils 44 zwischen zwei Profilelementen 21, hier beispielsweise zweier Profilschienen 28, zweier benachbarter Solarmodule 4 zeigt Fig. 8. Das Profilbauteil 44, beispielsweise Kunststoff, weist eine querschnittliche Rinnenform auf. Es dient der Abdichtung des zwischen den Bauteilen gegebenenfalls verbleibenden Spalts 48. Über zwei Seitenabschnitte 46 greift es in die Nuten 27 der Profilschiene 28 ein. Ersichtlich befindet sich die von der Rinnenform her resultierende Eintiefung 47 unterhalb des gegebenenfalls gegebenen sehr schmalen Spalts 48 zwischen den unmittelbar benachbarten Seitenkanten der beiden randseitigen Umgriffabschnitte 37 der Profilschienen 28. Etwaige über diesen Spalt 48 eindringende Feuchtigkeit sammelt sich in der Eintiefung 47 und läuft, nachdem die Anordnung schräg steht, nach unten, wo sie abgeführt werden kann. Hierzu kann die Eintiefung 47 etwas oberhalb des darunter befindlichen Solarmoduls münden (in diesem Bereich wäre gegebenenfalls das Dichtelement 39 zu unterbrechen). Wie gestrichelt gezeigt ist, ist es auch denkbar, an dem Profilbauteil 44 einen Dichtsteg 49 anzuformen, beispielsweise aus einem weichen Kunststoffmaterial, der in der Montagestellung im Spalt 48, diesen abdichtend, liegt.

Wie Fig. 8 ferner zu entnehmen ist, weist ein Profilelement 21, hier am Schenkel 25 gezeigt, eine Verzahnung 50 auf, über die eine verbesserte Auflage auf einer Tragprofilschiene 8 erreicht wird. Gezeigt sind auch zwei Tropfkanten 51 an dem oberen Schenkel 22.

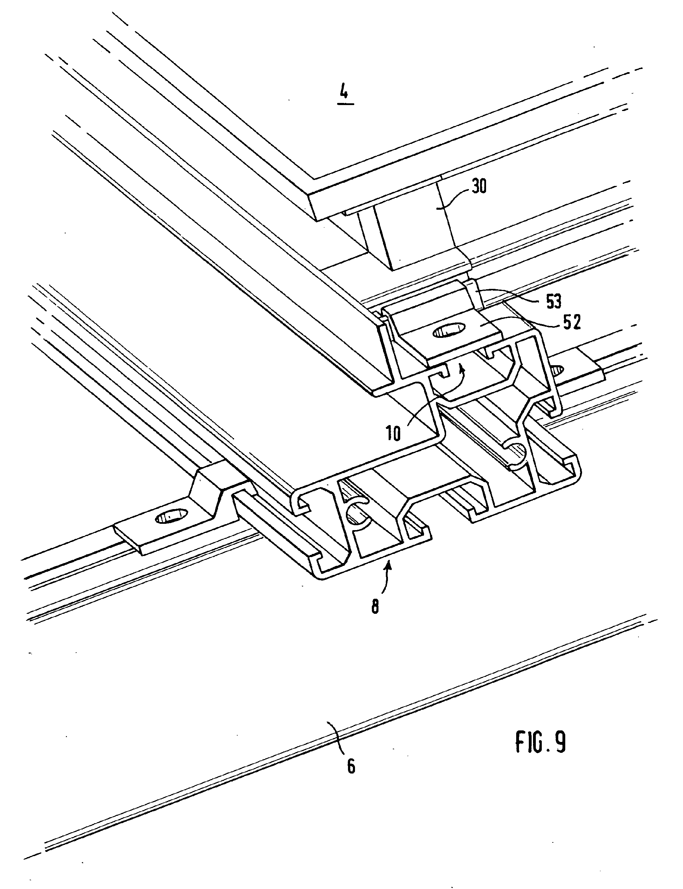

Die beschriebenen Fixierungsweisen lassen es zu, zwei übereinander angeordnete Bauteile bzw. eine Bauteilgruppe noch horizontal zu verschieben. Um die gesamte Gruppe bzw. eine horizontale Bauteilreihe auch hiergegen zu fixieren, wird jeweils das äußerste rechte und äußerste linke Bauteil einer Reihe im Bereich seines unteren Bauteilrandes und seines oberen Bauteilrandes fest mit dem der Tragprofilschiene 8 verbunden, siehe Fig. 9. Hierzu ist ein pratzenartiges Haltebauteil 52 vorgesehen, das den Vertikalsteg 53 des Profilverbinders 30, der an seinem unteren Ende vorgesehen und der Teil des dortigen Profilabschnitts 23 ist, übergreift, und über eine geeignete Befestigungsschraube nebst Nutenstein wird das Haltebauteil 52 sodann in der Nut 10 verankert, worüber auch eine Diebstahlsicherung aufgebaut werden kann.

Anstelle einer Anordnung von Profilverbindern 30, die selber Profilelemente 21 bilden, im Eckbereich eines Bauteils ist es auch möglich, die Profilschienen auf Gehrung zu schneiden und über einen innen liegenden einfachen Eckverbinder durch Verpressen zu verbinden. Ein unterseitig umlaufender Rahmen wird dann aus nur vier Profilschienen mit den innen liegenden Eckverbindern gebildet.

Denkbar ist es auch, an der unteren Bauteilkante nur Profilelemente, seien es Profilschienen oder Profilverbinder, anzuordnen, die keinen randseitigen nutartigen Umgriffabschnitt 37 aufweisen, die also die Bauteilkante, also z.B. die Kante der Glasplatte eines Solarmoduls, nicht bis zur Bauteiloberfläche umgreifen, sondern darunter enden. Dies bietet die Möglichkeit, dass infolge der leicht schrägstehenden Montagestellung Wasser und Schmutz über die untere Bauteilkante ungehindert ablaufen können, da dort keine den Ablauf behindernde Profilkante vorhanden ist. Somit kann sich dort kein Wasser und kein Schmutz ansammeln, der die freie Bauteilfläche reduziert. Insbesondere bei einer "schindelartigen" Anordnung, wenn also die oberen Bauteile die unteren Bauteile überlappen wie z.B. bei einer In-Dach-Anordnung, kann so eine Verschmutzung der Fläche vorteilhaft vermieden werden.

## Patentansprüche

1. Befestigungseinrichtung für an einem Gestellaufbau anzuordnende flächige Bauteile, insbesondere Solarmodule, umfassend eine erste und eine zweite, voneinander beabstandet, horizontal und parallel am Gestellaufbau anzuordnende Tragprofilschiene, an denen ein Bauteil im Bereich seiner einander gegenüberliegenden Ränder festlegbar ist, **dadurch gekennzeichnet, dass** an der Unterseite eines Bauteils (3) im Bereich zumindest eines Teils der Seitenränder angeordnete, das Bauteil zumindest abschnittsweise randseitig umgreifende Profilelemente (21) mit einem, vorzugsweise zum Seitenrand vorspringenden, Haltesteg (24) vorgesehen sind, die der Verbindung mit den Tragprofilschienen (8) dienen, und dass zum Verbinden eines Profilelements (21) mit wenigstens einer, vorzugsweise der ersten Tragprofilschiene (8) ein Halteelement (31) mit einem ersten Befestigungsabschnitt zum Befestigen an einem Befestigungsbereich (9) der Tragprofilschiene (8) und einem zweiten Befestigungsabschnitt mit zwei zu beiden Seiten vorspringenden Halteabschnitten (35), die in der Montagestellung die einander gegenüberliegenden Haltestege (24) zweier nebeneinander festzulegender Bauteile (3) übergreifen, vorgesehen ist.

2. Befestigungseinrichtung nach Anspruch 1, **dadurch gekennzeichnet, dass** die bauteilunterseitig angeordneten Profilelemente (21) Profilschienen (28) oder solche eckseitig verbindende Profilverbinder (30) sind.

3. Befestigungseinrichtung nach Anspruch 1 oder 2, **dadurch gekennzeichnet, dass** das Halteelement (31) im wesentlichen T-förmig ist und einen Längsschenkel (33) und einen an diesem angeordneten, die beiden Halteabschnitte (35) bildenden Querschenkel (34) aufweist.

4. Befestigungseinrichtung nach einem der vorangehenden Ansprüche, **dadurch gekennzeichnet, dass** die gegebenenfalls erste Tragprofilschiene (8) als Befestigungsbereich (9) eine hinterschnittene Nut (10) und der erste Befestigungsabschnitt des Halteelements (31) einen Hakenabschnitt (32) aufweist, über den das Halteelement (31) in der hinterschnittenen Nut (10) in der Montagestellung arretierbar ist.

5. Befestigungseinrichtung nach Anspruch 4, **dadurch gekennzeichnet, dass** die Nut (10) als doppelt hinterschnittene T-Nut und der Hakenabschnitt (32) der Nutform entsprechend T-förmig ausgebildet ist.

6. Befestigungseinrichtung nach einem der vorangehenden Ansprüche, **dadurch gekennzeichnet, dass** am Halteelement (31) wenigstens ein in der Montagestellung die benachbarten Profilelemente (21) gegenlagernder Anschlag (36) vorgesehen ist.

7. Befestigungseinrichtung nach einem der vorangehenden Ansprüche, **dadurch gekennzeichnet, dass** am ersten Befestigungsbereich (9) ein vorzugsweise stegförmiger Anschlag (12) für das oder die im Bereich des unteren Bauteilrands angeordneten Profilelemente (21) vorgesehen ist.

8. Befestigungseinrichtung nach einem der vorangehenden Ansprüche, **dadurch gekennzeichnet, dass** die gegebenenfalls zweite Tragprofilschiene (8) einen zweiten Befestigungsbereich (13) in Form einer zum Bauteilrand offenen, im wesentlichen C-förmigen Aufnahmenut (14) aufweist, in die der Haltesteg (24) des oder der dortigen Profilelemente (21), von einem Schenkel (16) der Aufnahmenut (14) übergriffen, eingreift.

9. Befestigungseinrichtung nach Anspruch 8, **dadurch gekennzeichnet, dass** an jeder Tragprofilschiene (8) der erste und der zweite Befestigungsbereich (9, 13) ausgebildet ist.

10. Befestigungseinrichtung nach Anspruch 8 oder 9, **dadurch gekennzeichnet, dass** in der Montagestellung der erste Befestigungsbereich (9) höher als der zweite Befestigungsbereich (13) liegt.

11. Befestigungseinrichtung nach einem der vorangehenden Ansprüche, **dadurch gekennzeichnet, dass** an dem in der Montagestellung unteren horizontal verlaufenden und als Profilschiene (28) ausgebildeten Profilelement (21) ein sich im gegebenenfalls vorgesehenen Profilverbinder (30) gegebenenfalls fortsetzendes Dichtelement (39) vorgesehen ist, an dem in der Montagestellung der Rand des unterhalb davon angeordneten Bauteils (3) anliegt.

12. Befestigungseinrichtung nach einem der vorangehenden Ansprüche, **dadurch gekennzeichnet, dass** zwischen zwei einander gegenüberliegenden Profilelementen (21) ein sich bezogen auf die Montagestellung in Längsrichtung erstreckendes und unterhalb des Übergangsspalts zwischen zwei benachbarten Bauteilen (3) verlaufendes Profilbauteil (44) vorgesehen ist.

13. Befestigungselement nach Anspruch 11 oder 12, **dadurch gekennzeichnet, dass** an jedem Profilelement (21) ein seitlich offener Aufnahme- oder Klemmabschnitt (27) für einen Klemmabschnitt (41) des Dichtelements (39) oder des Seitenschenkels (46) des Profilbauteils (44) vorgesehen ist.

14. Befestigungseinrichtung nach einem der vorangehenden Ansprüche, **dadurch gekennzeichnet, dass** an zumindest einem Teil der Auflageflächen, mit denen die Profilelemente (21) auf den Tragprofilschienen (8) aufliegen, eine zahn- oder rillenartige Oberflächenstruktur (50) vorgesehen ist.

15. Befestigungseinrichtung nach einem der vorangehenden Ansprüche, **dadurch gekennzeichnet, dass** ein Profilelement (21), insbesondere eine Profilschiene (28), wenigstens eine Hohlkammer (54) aufweist, in der ein vorzugsweise aus Metall bestgehendes Aussteifungselement angeordnet ist.

16. Bauteilgruppe (2), insbesondere Solarmodulgruppe, die auf einem Gestellaufbau (5) angeordnet ist, bei welcher mehrere nebeneinander angeordnete Bauteile (3) unter Verwendung einer Befestigungseinrichtung nach einem der Ansprüche 1 bis 14 zu einem Verbund zusammengesetzt sind.

17. Bauteilgruppe nach Anspruch 15, **dadurch gekennzeichnet, dass** lediglich an den äußeren Bauteilen (3) eine Diebstahlsicherungsvorrichtung vorgesehen ist.
